# EUROPÄISCHE PATENTANMELDUNG

(11) **EP 1 291 769 A2**
(43) Veröffentlichungstag der Anmeldung: **12.03.2003**
(21) Anmeldenummer: 02018211.9
(22) Anmeldetag: 20.08.2002
(51) Int. Cl.: G06F 9/46

(54) **Daten-Kommunikationssystem, sowie zentraler Rechner zur Verwendung in einem Daten-Kommunikationssystem**

(30) Priorität: 20.08.2001 DE 10140759
(71) Anmelder: softworks AG, 80797 München (DE)
(72) Erfinder: Weisweber, Wilhelm, 12623 Berlin (DE)
(74) Vertreter: Jehle, Volker Armin

(57) **Zusammenfassung**

Die Erfindung bettifft einen zentralen Rechner (3) zur Verwendung in einem Daten-Kommunikationssystem (1), sowie ein Daten-Kommunikationssystem (1), welches von mehreren Benutzern gemeinsam verwendet werden kann, und welches einen oder mehrere zentrale Rechner (3) mit jeweils mindestens einer Speichereinrichtung aufweist, eine Vielzahl von über das Internet (4a, 4b) an den zentralen Rechner (3) anschließbaren Endgeräten (2a, 2b), welche jeweils ein Ein-/Ausgabemittel mit einer optischen Anzeigeeinrichtung (16a, 16b) und einer Eingabeeinrichtung (17a, 17b) aufweisen, wobei an der optischen Anzeigeeinrichtung in Reaktion auf vom jeweiligen Endgerät (2a, 2b) vom zentralen Rechner (3) über das Internet (4a, 4b) empfangene Daten hierzu korrespondierende Anzeigedaten angezeigt werden, und wobei vom jeweiligen Endgerät (2a, 2b) aus in Reaktion auf vom jeweiligen Benutzer am jeweiligen Ein-/Ausgabemittel getätigte Eingaben Datenanfrage-Daten über das Internet (4a, 4b) an den zentralen Rechner (3) gesendet werden, der zentrale Rechner (3) in Reaktion auf die empfangenen Datenanfrage-Daten entsprechende Datenbankdaten aus einer in der Speichereinrichtung abgespeicherten Datenbank (5, 6) ausliest, und zu den Datenbankdaten korrespondierende Datenanfrage-Antwortdaten über das Internet (4a, 4b) an das entsprechende Endgerät (2a, 2b) übermittelt, durch welche eine Anzeige korrespondierender, weiterer Anzeigedaten an der Anzeigeeinrichtung veranlaßt wird, dadurch gekennzeichnet, dass die vom zentralen Rechner(3) ausgesendeten Daten und Datenanfrage-Antwortdaten so gewählt sind, daß für den jeweiligen Benutzer am jeweiligen Ein-/Ausgabemittel eine graphische Window-Benutzeroberfläche bereitgestellt wird.

## Beschreibung

Die Erfindung betrifft ein Daten-Kommunikationssystem gemäß Oberbegriff des Anspruchs 1, sowie einen zentralen Rechner zur Verwendung in einem derartigen Daten-Kommunikationssystem.

Herkömmliche Daten-Kommunikationssysteme weisen z.B. einen oder mehrere zentrale Rechner auf, eine oder mehrere an den oder die zentralen Rechner angeschlossene Speichereinrichtungen, und eine Vielzahl von Endgeräten, z.B. Clientrechner.

Empfängt der zentrale Rechner von einem der Endgeräte über eine Datenverbindung Datenanfrage-Daten, liest der zentrale Rechner entsprechende Datenbankdaten aus einer in der Speichereinrichtung abgespeicherten Datenbank aus, und übermittelt die zu den Datenbankdaten korrespondierenden Datenanfrage-Antwortdaten an das entsprechende Endgerät

Zur Datenübertragung zwischen Endgerät und zentralem Rechner kann z.B. eine Internet- oder Intranetverbindung verwendet werden. Die Kommunikation erfolgt hierbei unter Verwendung von sog. Internetprotokollen, z.B. dem Transmission Control Protocol (TCP) und dem Internet Protocol (IP), kurz TCP/IP. Hierzu ist z.B. auf den Endgeräten eine Browser-Software geladen, die das TCP/IP Protokoll verstehen und auswerten kann (Socket oder TCP/IP Stack).

Der am schnellsten wachsende Dienst des Internets beruht auf dem Hypertext Transfer Protocol (HTTP) und wird World Wide Web (WWW) genannt. Über das World Wide Web können einzelne Dokumente, sog. Websites oder Web-Pages, übertragen werden.

Vor der Herstellung einer Internetverbindung zwischen Endgerät und zentralem Rechner wird bei einigen Anwendungen das Endgerät zunächst mit einem weiteren, ihm zugeordneten Web-Host eines Internet-Serviceproviders (ISP) verbunden. Auf diesem läuft eine der Clientsoftware (d.h. dem Browser) auf dem Endgerät entsprechende Serversoftware. Dann wird am Endgerät die zu der jeweils gewünschten Website auf dem zentralen Rechner gehörende Web-Adresse eingegeben, zu der dann vom weiteren, dem Endgerät zugeordneten ISP-Web-Host aus eine Internetverbindung aufgebaut wird.

Die Web-Adresse wird in Form eines der, jeweiligen Website zugeordneten Domainnamens bzw. URL- (Universal Resource Locator-) Adresse angegeben. Diese ist aus mehreren Teilen aufgebaut Der erste Teil bezeichnet das Internet-Protokoll (Zeichenfolge "http://"). Darauf folgt der Name des jeweiligen zentralen Rechners, auf dem die Website gespeichert ist Der darauffolgende Teil kennzeichnet den Pfad zu einem lokalen Verzeichnis, in dem die Website auf dem zentralen Rechner gespeichert ist Mit dem letzten URL-Adressteil wird der exakte Dateiname der Website bezeichnet, die dann vom zentralen Rechner aus - unter Zwischenschaltung des ISP-Web-Hosts - über das Internet an das Endgerät übertragen wird.

Der Erfindung liegt die Aufgabe zugrunde, ein neuartiges Daten-Kommunikationssystem sowie einen neuartigen zentralen Rechner zur Verwendung in einem Daten-Kommunikationssystem zur Verfugung zu stellen. Die Erfindung löst diese und weitere Aufgaben durch die Gegenstände der Ansprüche 1 und 21.

Vorteilhafte Weiterbildungen der Erfindung sind in den Unteransprüchen angegeben.

Entsprechend einem Grundgedanken der Erfindung wird gemäß Anspruch 1 ein Daten-Kommunikationssystem bereitgestellt, welches von mehreren Benutzern gemeinsam verwendet werden kann, und welches einen oder mehrere zentrale Rechner mit jeweils mindestens einer Speichereinrichtung aufweist, eine Vielzahl von über das Internet an den zentralen Rechner anschließbaren Endgeräten, welche jeweils ein Ein-/Ausgabemittel mit einer optischen Anzeigeeinrichtung und einer Eingabeeinrichtung aufweisen, wobei an der optischen Anzeigeeinrichtung in Reaktion auf vom jeweiligen Endgerät vom zentralen Rechner über das Internet empfangene Daten hierzu korrespondierende Anzeigedaten angezeigt werden, und wobei vom jeweiligen Endgerät aus in Reaktion auf vom jeweiligen Benutzer am jeweiligen Ein-/Ausgabemittel getätigte Eingaben Datenanfrage-Daten über das Internet an den zentralen Rechner gesendet werden, der zentrale Rechner in Reaktion auf die empfangenen Datenanfrage-Daten entsprechende Datenbankdaten aus einer in der Speichereinrichtung abgespeicherten Datenbank ausliest, und zu den Datenbankdaten korrespondierende Datenanfrage-Antwortdaten über das Internet an das entsprechende Endgerät übermittelt, durch welche eine Anzeige korrespondierender, weiterer Anzeigedaten an der Anzeigeeinrichtung veranlaßt wird, **dadurch gekennzeichnet**, **dass** die vom zentralen Rechner ausgesendeten Daten und Datenanfrage-Antwortdaten so gewählt sind, daß für den jeweiligen Benutzer am jeweiligen Ein-/Ausgabemittel eine graphische Window-Benutzeroberfläche bereitgestellt wird, bzw. eine Benutzeroberfläche ähnlich der von Betriebssystemen wie Microsoft Windows ®.

### Bevorzugt wird die graphische Benutzeroberfläche dynamisch erzeugt, und angepaßt

Hierzu kann vorteilhaft mit Hilfe der o.g. Daten z.B. ein Dokument, welches ein Markup- oder Tag-Datenformat aufweist, d.h. ein Dokument mit mit Identifizierkennzeichen versehenen Daten, an das jeweilige Endgerät gesendet werden (z.B. ein HTML-Dokument (HTML = Hypertext Transfer Markup Language)). In dem Dokument können die graphische Benutzeroberfläche, z.B. deren Standardfunktionalität betreffende Daten eingebunden sein, z.B. mittels eines animierten, vektor-graphikbasierten Dokuments (z.B. ein SVG-Dokument (SVG = Scalable Vector Graphics)), das mit geeigneten Anzeigemitteln wie z.B. dem SVG-Viewer von Adobe ® dargestellt werden kann. Die Objekte im SVG sind mit geeigneten, einer bestimmten Namenskonvention entsprechenden Namen benannt.

Zur dynamischen Anpassung der graphischen Benutzeroberfläche wird vorteilhaft endgerätseitig eine zur Laufzeit manipulierbare, hierarchisch aufgebaute Dokumentenstruktur mit Ereignismechanismus verwendet, wie beispielsweise SVG oder HTML, auf die über ein Dokument-Objekt-Modell (DOM) über JavaScript von außen zugegriffen werden kann. Der zugreifende (JavaScript-)Code kann - ebenso wie ein mit dem DOM kommunizierender (Java-Applet-)Programmcode - z.B. vom o.g. (HTML-)Dokument geladen werden.

Besonders bevorzugt weisen die Endgeräte eine Speichereinrichtung auf, auf welcher eine herkömmliche Internet-Browser-Software (z.B. Microsoft Internet Explorer®, Netscape Navigator®, usw.) in Verbindung mit dem SVG-Viewer-Plugin von Adobe ® gespeichert ist

Bei entsprechenden Eingaben eines Benutzers des Endgeräts (z.B. Bewegen / Anklicken einer Maus) werden die entsprechenden Daten vom Browser aus über das DOM (JavaScript) weitergeleitet, und von diesem dem o.g. Java-Applet mitgeteilt Vorteilhaft wird die graphische Benutzeroberfläche (bzw. das entsprechende SVG-Dokument) dann - entsprechend der Eingaben des Benutzers - aus dem Applet heraus geändert Zur Minimierung des Datenverkehrs geschieht dies, falls möglich, ohne vorherigen Abruf zusätzlicher Daten beim zentralen Rechner.

Über das an der jeweiligen optischen Anzeigeeinrichtung dargestellte Browserfenster kann somit eine über das World Wide Web (WWW) verfügbare, komplette, datenbankgesteuerte graphische Oberfläche bereitgestellt werden, mit welcher im WWW entsprechende Betriebssystem-Funktionen wie bei herkömmlichen grafischen Betriebssystemen (Microsoft Windows®, oder Apple MacOS®) zur Verfügung gestellt werden - z.B. Drag& Drop, verschiebbare Fenster, Auswahllisten, Texteingabe, Pop-Up-Menüs, Check- und Comboboxen, Suchfunktionen, etc. Die entsprechenden Dateiverzeichnisse und Funktionen der erfindungsgemäßen graphischen Benutzeroberfläche (bzw. des erfindungsgemäßen, auf einer graphischen Benutzeroberfläche basierenden Betriebssystems) sind beispielsweise in der o.g. Datenbank abgebildet bzw. gespeichert

Durch entsprechende Eingaben am o.g. Ein-/Ausgabemittel können von einem Benutzer des Datenkommunikationssystems über das WWW z.B. Dateien (beispielsweise Textdateien) erstellt und (zentral) abgespeichert, und Zugriffsrechte hierauf festgelegt werden (z.B. indem definiert wird, ob, und wenn ja, welche der übrigen Benutzer des Datenkommunikationssystems die entsprechenden Dateien aufrufen, aber nicht ändern, oder aufrufen und ändern dürfen).

Wie bereits erwähnt, wird das SVG am Browser des jeweiligen Endgeräts dargestellt. Ein Event auf eines der enthaltenen Objekte wird vom SVG-Viewer, der als Plugin im Browser läuft, registriert, und an einen für das Objekt eingetragenen Prozess bzw. Methode des parallel laufenden Applets (EventHandler) weitergereicht. Das Applet interpretiert den Event und führt die vorgesehenen Funktionen aus, die im Standardfall eindeutig das Verhalten des jeweiligen Elements der Benutzeroberfläche beschreiben (z.B. Klick auf den OK-Button aktiviert einen Commit in der Datenbank).

Abweichend hiervon kann der zentrale Rechner in Abhängigkeit von der Anwendungssituation eine modifizierte Funktionalität bereitstellen, die die o.g. Standardfunktionalität überschreibt (z.B. beim Klick auf den OK-Button wird - falls der Anwender nicht das Recht hat, Daten zu ändern - der jeweilige Datensatz verlassen, ohne die Änderungen zu übergeben, und der nächste Datensatz wird angezeigt). Die Funktionalität kann also in Abhängigkeit von den jeweiligen Daten und dem Anwendungskontext geändert werden. Die gesamt Funktionalität der graphischen Benutzeroberfläche am jeweiligen Endgerät wird durch Informationen aus der zentralen Datenbank gesteuert, wobei der zentrale Rechner dem jeweiligen Endgerät die passenden Informationen in Abhängigkeit vom Anwendungskontext zur Verfügung stellt.

Statt des o.g. zentralen Rechners können z.B. auch mehrere, zentrale und/oder dezentrale Rechner verwendet werden, die gemeinsam die gleiche Funktionalität erfüllen, wie der o.g. (einzelne) zentrale Rechner. Vorteilhaft wird an der optischen Anzeigeeinrichtung - außer einem ersten Window - zusätzlich noch ein zweites Window angezeigt.

Besonders vorteilhaft ist der zentrale Rechner und/oder das jeweilige Endgerät so ausgestaltet und eingerichtet, daß durch entsprechende Eingaben am Ein-/Ausgabemittel im ersten Window angezeigte Daten in das zweite Window kopiert werden können. Bevorzugt sind die im ersten Window angezeigten Daten einer ersten Datei zugeordnet, und die in das zweite Window kopierten Daten einer zweiten Datei. Vorteilhaft sind die erste und/oder die zweite Datei auf der Speichereinrichtung des zentralen Rechners, und/oder die erste und/oder die zweite Datei auf einer Speichereinrichtung des jeweiligen Endgeräts abgespeichert

Bei einer vorteilhaften Ausgestaltung ist der zentrale Rechner und/oder das jeweilige Endgerät so ausgestaltet und eingerichtet, daß an der optischen Anzeigeeinrichtung ein auf das erste Window bezogenes Pop-up-Menü angezeigt wird. Bevorzugt ist der zentrale Rechner und/oder das jeweilige Endgerät so ausgestaltet und eingerichtet, daß an der optischen Anzeigeeinrichtung eine auf das erste Window bezogene Combo- oder Checkbox angezeigt wird.

Vorteilhaft ist das Endgerät ein Computer, insbesondere ein tragbare Computer oder ein Personalcomputer. Bevorzugt ist das Endgerät ein internetfähiger PDA (Personal Digital Assistant), oder ein internetfähiges Telefon, insbesondere ein UMTS-Telefon.

Vorteilhaft weisen die Endgeräte eine Speichereinrichtung auf, auf welcher zum Versenden und Empfangen der Daten eine Internet-Browser-Software gespeichert ist.

Bevorzugt weist die optische Anzeigeeinrichtung einen Bildschirm oder eine Flüssigkristallanzeige auf.

Bei einer vorteilhaften Ausgestaltung weist die Eingabeeinrichtung eine Tastatur, eine Maus, einen Touch-Screen-Griffel, einen Lichtgriffel und/oder einen Joystick auf, wobei die - in Reaktion auf die an der Eingabeeinrichtung getätigten Eingaben - vom Endgerät ausgesendeten Datenanfrage-Daten jeweils von den momentan an der Anzeigeeinrichtung angezeigten Anzeigedaten abhängig sind.

Vorteilhaft sind die Daten oder die Datenanfrage-Antwortdaten Daten, die die jeweiligen von einem auf der Datenbank abgespeicherten Anwendungsprogramm für den jeweiligen Benutzer zur Verfügung gestellten Funktionalitäten betreffen.

Bevorzugt sind die Daten oder die Datenanftage-Antwortdaten Daten, die das jeweilige von einem auf der Datenbank abgespeicherten Anwendungsprogramm für den jeweiligen Benutzer zur Verfügung gestellte Benutzermenü betreffen.

Im folgenden wird die Erfindung unter Bezug auf ein Ausführungsbeispiel und die beigefügte Zeichnung näher erläutert. In der Zeichnung zeigt:
Figur 1 ein Datenkommunikationssystem gemäß einem Ausführungsbeispiel der vorliegenden Erfindung;
Figur 2a eine schematische Detaildarstellung des prinzipiellen Aufbaus und der prinzipiellen Funktionsweise der Komponenten des in Figur 1 gezeigten Datenkommunikationssystems;
Figur 2b eine schematische Detaildarstellung des prinzipiellen Aufbaus und der prinzipiellen Funktionsweise des in Figur 2a gezeigten Clientrechners, und
Figur 3 eine schematische Detaildarstellung eines Ein-/Ausgabemittels der in Figur 1 gezeigten Rechner.

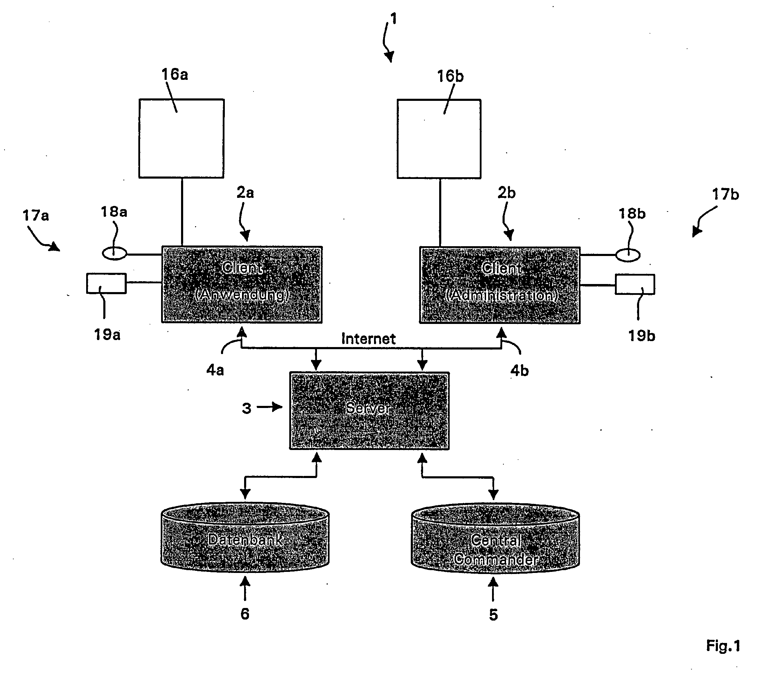

In Figur 1 ist ein Datenkommunikationssystem 1 gemäß einem Ausführungsbeispiel der Erfindung gezeigt. Dieses weist eine Vielzahl von Rechnern 2a, 2b auf (z.B. mehr als zwei, zehn, hundert oder tausend Rechner 2a, 2b), sowie einen Serverrechner 3. Das Datenkommunikationssystem 1 kann von mehreren Benutzern genutzt werden, wobei die Anzahl der Benutzer relativ groß sein kann, z.B. größer als zehn, hundert oder tausend.

Der Serverrechner 3 ist an eine in einer (nicht dargestellten) Speichereinrichtung abgespeicherten zentralen Systemsteuerungs-Datenbank 5 angeschlossen, sowie an eine oder mehrere (z.B. zwei oder drei) in der o.g. Speichereinrichtung oder in einer oder mehreren weiteren Speichereinrichtungen abgespeicherten Anwendungsdatenbanken 6.

In der/den Anwendungsdatenbanken 6 sind die eigentlichen Nutzdaten gespeichert. Der Serverrechner 3 dient zur Integration der Nutzdaten, und zu deren Weitervermittlung an den entsprechenden Rechner 2a, 2b, sowie zur Ermittlung und Weiterleitung sämtlicher Informationen zur Steuerung des Systems aus der Datenbank 5.

Die zentrale Systemsteuerungs-Datenbank 5 stellt den Daten-Kontrollfluß für das gesamte Datenkommunikationssystem 1 zur Verfügung, sowie denjenigen innerhalb von an den Rechnern 2a, 2b bereitgestellten graphischen Benutzerschnittstellen.

Der Serverrechner 3 kann zwei verschiedene Arten von Rechnern 2a, 2b bedienen: Zum einen sog. Anwendungs-Rechner 2a, die dazu dienen, Informationen aus den Anwendungsdatenbanken 6 zu nutzen bzw. anzeigen (m Figur 1 links oben dargestellt); zum anderen sog. Administrations-Rechner 2b zur Administration der zentralen Systemsteuerungs-Datenbank 5.

Die Rechner 2a, 2b können - z.B. über hier nicht dargestellte ISP-Rechner (ISP = Internet Service Provider) - an das Internet angeschlossen werden. Alternativ ist z.B. auch der Anschluß an ein Intranet möglich. Jeder Rechner 2a, 2b weist ein Ein-/Ausgabemittel auf, z.B. eine Anzeigeeinrichtung 16a, 16b - hier: ein Bildschirm - , sowie eine Eingabeeinrichtung 17a, 17b (hier: eine Maus 18a, 18b und eine Tastatur 19a, 19b).

Auf einer (nicht dargestellten) Speichereinrichtung der Rechner 2a, 2b ist eine herkömmliche Browsersoftware (z.B. der Microsoft Internet Explorer®, oder der Netscape Navigator®) in Verbindung mit dem SVG-Viewer-Plugin von Adobe ® geladen.

Durch entsprechende Eingaben an der Eingabeeinrichtung 17a, 17b (z.B. durch Eingeben der URL-Adresse des Serverrechners 3 (bzw. einer auf dessen nicht dargestellter Speichereinrichtung gespeicherter Datei) am Browser 24) wird die entsprechende URL-Adresse an den jeweiligen ISP-Rechner übertragen. Dieser veranlaßt dann, daß eine Internetverbindung 4a, 4b zwischen dem jeweiligen Rechner 2a, 2b und dem Serverrechner 3 aufgebaut wird. Bei einem alternativen Ausführungsbeispiel ist der Serverrechner 3 unter Zwischenschaltung einer zusätzlichen Verbindungsschicht an das Internet (bzw. das Intranet) angeschlossen. Hierzu können z.B. eine oder mehrere zusätzliche Rechner vorgesehen sein, über die der Serverrechner mit dem Internet (oder dem Intranet) verbunden wird, z.B. ein Application Server / Web Server bzw. "Servlet"-Rechner zur Datenkommunikation, mit dem zusätzlich auch eine Firewall zur Abwehr unberechtigter Zugriffe realisiert wird. Alternativ kann z.B. ein separater, mit dem Application Server verbundener Firewall-Rechner verwendet werden. Bei einem weiteren alternativen Ausführungsbeispiel kann z.B. die Funktion der Firewall z.B. auch vom Serverrechner 3 selbst erfüllt werden, indem dort eine entsprechende Software installiert wird.

Nachdem die Internet- bzw. die Intranetverbindung 4a, 4b zwischen dem jeweiligen Rechner 2a, 2b und dem Serverrechner 3 hergestellt ist, wird vom Serverrechner 3 aus über die jeweilige Verbindung ein in der Server-Speichereinrichtung, z.B. der o.g. Datei, gespeichertes HTML-Dokument (HTML = Hypertext Transfer Markup Language) an den jeweiligen Rechner 2a, 2b gesendet

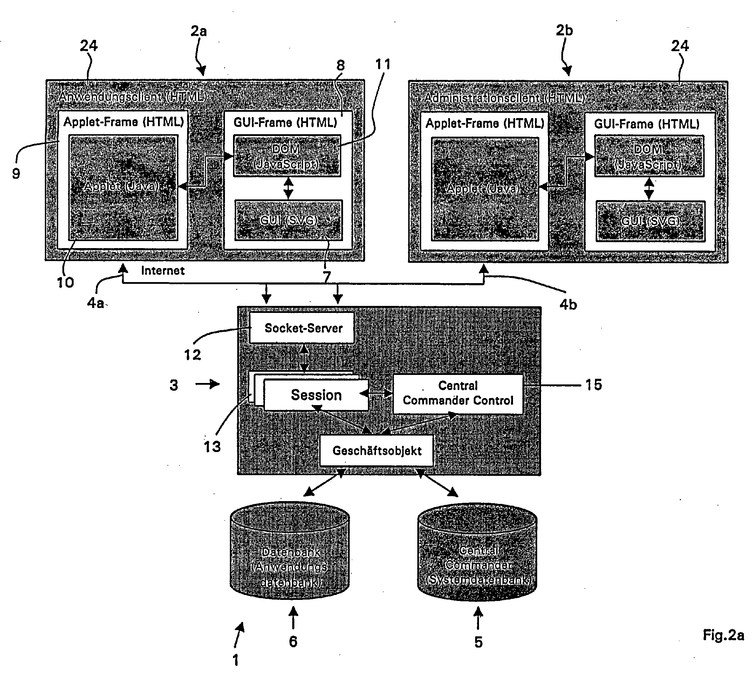

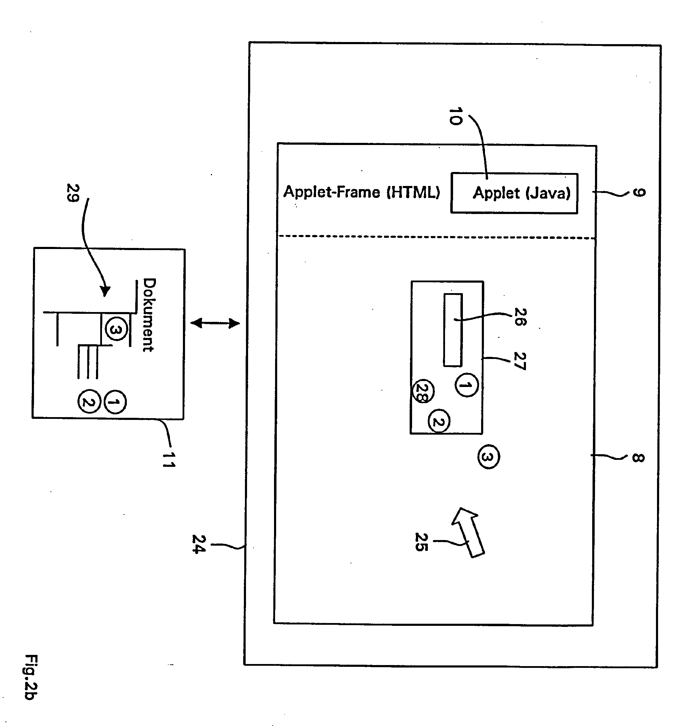

Wie in Figur 2a gezeigt ist, wird hierdurch auf dem jeweiligen Rechner 2a, 2b eine in ein Frame 8 des HTML-Dokuments eingebettete graphische Benutzerschnittstelle 7 (GUI bzw. graphical user interface) realisiert, und zwar mittels eines animierten Dokuments im (komprimierten) Scalable Vector Graphics (SVG)-Format.

Das HTML-Dokument lädt ein Java-Applet 10, welches in ein weiteres Frame des HTML-Dokuments eingebettet ist Dieses bleibt, solange die Anwendung nicht geschlossen wird, in der Speichereinrichtung des jeweiligen Rechners 2a, 2b gespeichert

Das Applet-Frame 9 hat keine Ausdehnung, so daß es im Anzeigefenster des auf dem jeweiligen Rechner 2a, 2b laufenden Web-Browsers 24 nicht angezeigt wird. Die Aufgabe des Java-Applet 10 besteht darin, über ein Socket die Verbindung 4a, 4b zum Serverrechner 3 zu halten, die GUIs 7 im GUI-Frame 8 zu wechseln (z.B. beim "Vor-" oder "Zurückblättern" von Dokumenten), das Menü, die Funktionstastenbelegung und die GUI-Funktionalität für die GUIs 7 zwischenzuspeichern, die zwischen verschiedenen GUIs ausgetauschten Daten zu verwalten (z.B. zwischenzuspeichem), und auf GUI-Komponenten zuzugreifen. Die Kommunikation mit dem GUI-Frame 8 erfolgt hierbei über JavaScript-Code, der über das Document Object Model (DOM) für HTML oder SVG auf die jeweiligen Dokumente zugreift.

Der entsprechende JavaScript-Code 11 wird vom GUI-Frame 8 geladen. Der Code 11 dient zur Steuerung der Funktionalitäten der GUI-Komponenten, und zur Kommunikation mit dem Java-Applet 10. Der JavaScript-Code 11 besteht aus den Deklarationen globaler Variablen für die GUI-Komponenten, die danach als JavaScript-Objekte zur Verfügung stehen, und aus einer speziellen Funktion, die beim Laden jedes SVG-Dokuments aufgerufen wird, und die globalen Variablen initialisiert.

Über das Document Objects Model (DOM) 11 wird gemäß Figur 2b eine zur Laufzeit manipulierbare, hierarchisch aufgebaute Dokumentenstruktur zur Verfügung gestellt, mit welcher ein Ereignismechanismus realisiert wird. Hierbei sind bestimmten Elementen (z.B. einem im Browser 24 dargestellten Fenster 27, einem darin liegenden Eingabefeld 26, sowie einem darin liegenden Button 28, etc.) entsprechende Äste eines die Dokumentenhierarchie verkörpernden Baums 29 zugeordnet. Die vom jeweiligen Benutzer ausgelösten Ereignisse (Bewegen eines Cursors 25 über das Fenster 27, Mausklick im entsprechenden Fenster 27, Bewegung der Maus 18a, Tastatureingaben, etc.) werden vom entsprechenden Ast des Hierarchiebaums 29 in der Hierarchie des Dokuments nach oben hin weitergemeldet, und dann dem o.g. Applet 10 mitgeteilt. Das Applet 10 veranlaßt dann - falls möglich unmittelbar und selbständig, ansonsten nach vorheriger Datenabfrage vom Scrverrechner 3 - eine entsprechende Anpassung der graphischen Benutzerschnittstelle 7. Mit anderen Worten ist die graphische Benutzerschnittstelle 7 aus dem Applet 10 (bzw. dem JavaScript 11) heraus änderbar. Dadurch wird eine dynamische Erzeugung und Anpassung der graphische Benutzerschnittstelle 7 erreicht, wobei der Datenverkehr mit dem Serverrechner 3 soweit wie möglich reduziert ist

Wieder bezogen auf Figur 2a ist auf dem Serverrechner 3 ein Socket 12 eingerichtet, welches einen bestimmten Port (z.B. den Port 7777) des Serverrechners 3 auf eingehende Socketverbindungen hin überwacht Bei der ersten Verbindungsaufnahme des entsprechenden Rechners 2a, 2b mit dem Serverrechner 3 wird eine Benutzeranmeldung durchgeführt (Login). Daraufhin wird vom Serverrechner 3 eine Session 13 eröffnet, der eine eindeutige Session-ID zugewiesen wird. Damit ist für den Fall einer Unterbrechung der Verbindung 4a, 4b gewährleistet, daß die entsprechende Verbindung 4a, 4b später wieder aufgenommen werden kann. Vom selben Rechner 2a, 2b aus kann ein Benutzer mehr als eine Socketverbindung zum Serverrechner 3 herstellen, die alle die gleiche Session-ID erhalten. Nach der Abmeldung des Benutzers werden alle Socketverbindungen der jeweiligen Session wieder abgebaut

Des weiteren ist es möglich, daß ein Benutzer von verschiedenen Rechnern 2a, 2b aus eine Socketverbindung mit dem Serverrechner 3 herstellt Für jede dieser Verbindungen wird eine eigene Session-ID vergeben.

Die Session 13 verwaltet die jeweiligen Anfragen des Benutzers, der sich über einen der o.g. Rechner 2a, 2b beim Serverrechner 3 angemeldet hat Wie im folgenden noch genauer erläutert wird, werden beim erfindungsgemäßen Datenkommunikationssystem 1 die Daten mit Hilfe sog. (Geschäfts-)Objekte verwaltet Jedes Geschäftsobjekt wird von einer dieser zugeordneten graphischen Benutzerschnittstelle (GUI) administriert.

Die An- und Abmeldung (Login bzw. Logout) des jeweiligen Benutzers wird mittels eines spezielles Geschäftsobjekts realisiert Beim Login wird dem entsprechenden Geschäftsobjekt der Name und das Paßwort des jeweiligen Benutzers übergeben, sowie der Name bzw. die Kennung des Rechners 2a, 2b, und die Nummer des Client-Ports der Socketverbindung. Anhand dieser Daten wird der jeweilige Benutzer authentifiziert. Wenn die Authentifizierung erfolgreich war, richtet das entsprechende Geschäftsobjekt eine Session 13 ein, und trägt diese in eine Sessionliste des Serverrechners 3 ein. Anschließend wird von der Session 13 eine Verbindung zur Systemsteuerungs-Datenbank 5 und zur Anwendungsdatenbank 6 hergestellt Dies kann z.B. mit Hilfe einer speziellen Software wie z.B. dem Java Database Connectivity Kit (JDBC) erfolgen. Die Datenbanken 5, 6 liefern dann eine eindeutige Verbindungs-ID an die Session 13 zurück. Dann werden aus der Systemsteuerungs-Datenbank 5 die zum jeweiligen Benutzer zugeordneten GUI-Daten ausgelesen, insbesondere das Menü, die Belegung der Funktionstasten, und die GUI-Funktionalität. Die jeweilige (Verbindungs-)ID wird von der Session 13 zur Wiederherstellung der Verbindung nach einer etwaigen Verbindungsunterbrechung benötigt

Die Session-ID und die GUI-Daten werden dann vom Serverrechner 3 aus an den Rechner 2a, 2b übermittelt Wenn sich der gleiche Benutzer vom selben Rechner 2a aus zum zweiten Mal anmeldet, wird eine zweite Socketverbindung hergestellt, der die gleiche Session-ID zugewiesen wird, wie der bereits bestehenden Verbindung. Meldet sich der Benutzer von einem anderen Rechner 2b aus an, wird eine neue Session-ID vergeben.

Ein dem Login-Geschäftsobjekt entsprechendes Logout-Geschäftsobjekt schließt nach dem Abmeldewunsch des Benutzers die Socketverbindung zum Rechner 2a, 2b und löscht die entsprechende Session 13 aus der Sessionliste des Serverrechners 3.

In der Systemsteuerungs-Datenbank 5 sind u.a. - benutzerindividuell - die GUI-Daten gespeichert (d.h. die Daten bzgL Darstellung und Verhalten der GUI-Komponenten und des Kontrollflusses innerhalb der GUIs), sowie Informationen bzgL des Workflows im gesamten Datenkommunikationssystem 1.

Löst ein Benutzer eine Aktion aus, indem er beispielsweise am von der graphischen Benutzerschnittstelle 7 am Bildschirm 16a seines Rechners 2a dargestellten SVG-Dokument auf einen Button drückt, wird die entsprechende Aktion vom SVG-Viewer des Browsers registriert, und dann geprüft, ob für die entsprechende GUI-Komponente eine passende Ereignisbehandlung definiert ist Falls eine Rreignisbehandlung definiert ist, wird ein in der lokalen GUI-Steuerung (JavaScript 11) definierter Prozeß (im folgenden "handleEvent()" genannt) aufgerufen. Dessen Argumente beschreiben die auszuführenden Aktionen (d.h. sowohl die jeweilige Datenbankabfrage als auch das weitere Vorgehen, z.B. das Laden eines neuen GUIs 7 oder die weiteren Aktivitäten auf der aktuellen Seite), sowie die Bedingungen für die Ausführung der Aktionen. Falls keine Ereignisbehandlung definiert ist, wird das Ereignis ignoriert

Der handleEvent()-Prozeß ist im Applet definiert Das Applet, das die GUI-Fuktionalität beim Wechsel zu der Seite über den Server aus der Systemsteuerungsdatenbank geladen hat, kann mit Hilfe dieser Informationen passend auf ein Ereignis in Abhängigkeit vom Anwendungskontext reagieren, indem es zunächst die Anwendungsbedingungen der Events auswertet Sind diese erfüllt, werden die zugehörigen Aktionen ausgeführt, z.B. das Senden einer Anfrage zum Server und der Empfang von Geschäftsobjekten, das Laden eines neuen GUIs 7, oder das Deaktivieren bestimmter GUI-Komponenten. Sind die Bedingungen nicht erfüllt, veranlaßt das Steuerprogramm 15 die Session 13, eine entsprechende Fehlermeldung an den Rechner 2a zu versenden.

Der Server nutzt die für die Session 13 bestehende JDBC-Verbindung, um mittels eines SQL-Befehls ihre Datenbankanforderung an die entsprechende Datenbank weiterzuleiten. Über die gleiche Verbindung werden vom Server dann von der entsprechenden Datenbank die jeweiligen Abfrageergebnisse empfangen. Wenn die Anforderung eine Datenbank-Abfrage war, wird die Ergebnismenge, z.B. eine Ergebnistabelle ausgewertet, und an den jeweiligen Rechner 2a weitergeleitet War die Anforderung eine Datenbank-Aktualisierung, wird dem Rechner 2a über die Socketverbindung gemeldet, ob die Aktualisierung erfolgreich durchgeführt wurde, oder nicht

In der Zwischenzeit ist durch das Java-Applet 10 die GUI 7 zur Präsentation der erwarteten Daten vorbereitet worden. Werden diese dann empfangen, werden sie vom Java-Applet 10 in die geladene GUI 7 eingetragen, und am Bildschirm des Rechners 2a dargestellt

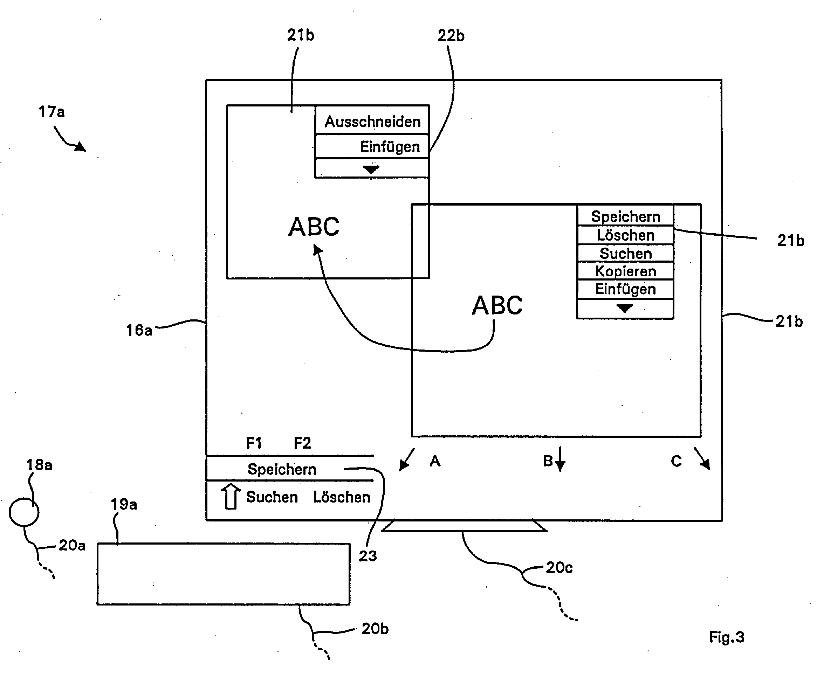

In Figur 3 ist eine schematische Detaildarstellung eines Ein-/Ausgabemittels 17a des in Figur 1 gezeigten Rechner 2a gezeigt Der Bildschirm 16a, die Maus 18a und die Tastatur 19a sind jeweils über entsprechende Datenkabel 20a, 20b, 20c an den Rechner 2a angeschlossen. Alternativ können auch andere Eingabegeräte wie z.B. Funkmäuse, Trackballs, Touch-Screens, etc. verwendet werden.

Durch die auf der Speichereinrichtung des Rechners 2a gespeicherte Browsersoftware wird ein dem GUI-Frame 8 (Figur 2a) entsprechendes Fenster bzw. Window 21a am Bildschirm 16a dargestellt, sowie - falls vom jeweiligen Benutzer ein weiteres GUI-Frame geladen wird - ein diesem entsprechendes zweites Fenster bzw. Window 21b.

Wie in Figur 3 gezeigt ist, ist im Fenster 21a ein Text "ABC" enthalten, sowie ein Menüfeld 22a. Der Text "ABC" ist vorher durch entsprechende Eingaben an der Tastatur 19a vom jeweiligen Benutzer in das Fenster 21a eingegeben worden. Durch Betätigen des Menüpunkts "Speichern" im Menüfeld 22a mit der Maus 18a (oder durch Betätigen einer entsprechend belegten Funktionstaste der Tastatur 19a) werden den Text repräsentierende Textdaten gemäß Figur 2a vom Rechner 2a über die Internetverbindung 4a an den Serverrechner 3 gesendet, und unter einem bestimmten Dateinamen in der Anwendungsdatenbank 6 abgespeichert Der Dateiname kann vom jeweiligen Benutzer durch entsprechende Eingaben an der Maus 18a / der Tastatur 19a frei gewählt werden. Außerdem kann der jeweilige Benutzer - ebenfalls durch entsprechende Eingaben an der Maus 18a / der Tastatur 19a - die Zugriffsrechte auf die jeweilige Datei fesdegen (z.B. bestimmen, ob und wenn ja, welche der übrigen Benutzer des Datenkommunikationssystems 1 die entsprechende Datei aufrufen, aber nicht ändern, oder aufrufen und ändern dürfen).

Außerdem kann der Benutzer - wieder bezogen auf Figur 3 - z.B. den Menüpunkt "Suchen" im Menüfeld 22a mit der Maus 18a (oder durch Betätigen einer entsprechend belegten Funktionstaste der Tastatur 19a) anwählen, und anschließend z.B. einen bestimmten zu suchenden Text eingeben. Die den zu suchenden Text repräsentierenden Textdaten werden dann gemäß Figur 2a vom Rechner 2a über die Internetverbindung 4a an den Serverrechner 3 gesendet. Die Textdaten werden dann mit den unter einem bestimmten Dateinamen in der Anwendungsdatenbank 6 gespeicherten Textdaten verglichen. Die zu durchsuchenden Dateien kann der jeweilige Benutzer - ebenfalls durch entsprechende Eingaben an der Maus 18a / der Tastatur 19a - frei wählen. Bei Übereinstimmung (oder Nichtübereinstimmung) der Textdaten mit den gespeicherten Textdaten wird vom Serverrechner 3 eine entsprechende Rückmeldung an den Rechner 2a gesendet, und am Bildschirm 16a ausgegeben.

Wie in Figur 3 weiter gezeigt ist, können die Fenster 21a, 21b mit Hilfe der Maus 18a z.B. in Richtung der Pfeile A, B, C verschoben, d.h. an beliebigen Stellen des Bildschirms 16a angeordnet werden, oder z.B. vergrößert oder verkleinert werden.

Des weiteren wird dem Benutzer vom erfindungsgemäßen Datenkommunikationssystem 1 auch eine "Drag & Drop"-Funktion bereitgestellt: Beispielsweise kann mit Hilfe entsprechender Eingaben mit der Maus 18a, oder durch Betätigen einer entsprechend belegten Funktionstaste der Tastatur 19a der Text "ABC" markiert werden (beispielsweise mit Hilfe eines am Bildschirm 16a dargestellten Cursors), und anschließend z.B. durch Betätigen des Menüpunkts "Kopieren" (oder eines Menüpunkts "Ausschneiden") kopiert (oder ausgeschnitten) werden.

Anschließend kann der Benutzer den Text "ABC" durch entsprechendes Anordnen des Cursors, und anschließendes Betätigen des Menüpunkts "Einfügen" an anderer Stelle im Fenster 21a wieder einfügen. Die geänderte Stelle des Texts "ABC" im Fenster 21a wird anschließend durch Übertragen entsprechender Positions-Daten an den Serverrechner 3 in einer in dessen Speichereinrichtung abgespeicherten, dem Fenster 21a zugeordneten Datei vermerkt

Alternativ kann der Benutzer durch Anordnen des Cursors an einer beliebigen Stelle im zweiten Fenster 21b, und durch anschließendes Betätigen eines Menüpunkts "Einfügen" in einem im zweiten Fenster 21b enthaltenen Menüfeld 22b den Text "ABC" auch vom ersten Fenster 21a aus an eine beliebige Stelle im zweiten Fenster 21b verschieben. Anschließend wird - durch Übertragen entsprechender Daten an den Serverrechner 3 - der Text in einer weiteren auf dessen Speichereinrichtung gespeicherten, dem zweiten Fenster 21b zugeordneten Datei abgespeichert (und optional der Text aus der entsprechenden, dem ersten Fenster 21a zugeordneten Datei gelöscht).

Wird mit dem Cursor ein bestimmter Menüpunkt überstrichen, kann - optional - ein Hilfetext eingeblendet werden, der dem Benutzer die vom jeweiligen Menüpunkt bereitgestellte Funktionalität erläutert.

Wie oben erläutert, kann der jeweilige Benutzer, statt den jeweiligen Menüpunkt 22a, 22b (z.B. "Löschen", "Speichern", etc.) am jeweils gültigen Fenster 21a, 21b mit der Maus 18a anzuklicken, alternativ z.B. jeweils auch eine entsprechend belegte Funktionstaste F1, F2 der Tastatur 19a betätigen. Die Belegung der Funktionstasten F1, F2 kann z.B. dadurch geändert werden, daß der Benutzer den Cursor über einem entsprechenden Menüpunkt 22a, 22b (z.B. "Löschen", "Speichern", etc.) im jeweiligen Fenster 21a, 21b anordnet, eine entsprechende Maustaste (ggf. mehrfach) betätigt, den Cursor dann in einem unbelegten (oder zu überschreibenden) Funktionstasten-Funktions-Anzeigefeld 23 anordnet, und dann erneut einen Mausbefehl eingibt (z.B. die entsprechende Maustaste wieder losläßt).

Beim erfindungsgemäßen Datenkommunikationssystem 1 wird somit über das an der jeweiligen optischen Anzeigeeinrichtung dargestellte (Browser-)Fenster 21a, 21b eine über das World Wide Web (WWW) verfügbare, komplette graphische (Betriebssystem-) Oberfläche bereitgestellt, mit welcher im WWW entsprechende Betriebssystem-Funktionen wie bei herkömmlichen grafischen Betriebssystemen verfügbar gemacht werden können.

### Bezugszeichenliste

- 1: Datenkommunikationssystem
- 2a: Clientrechner
- 2b: Clientrechner
- 3: Serverrechner
- 4a: Internetverbindung
- 4b: Internetverbindung
- 5: Systemsteuerungs-Datenbank
- 6: Anwendungsdatenbank
- 7: graphische Benutzerschnittstelle
- 8: GUI-Frame
- 9: Applet-Frame
- 10: Java-Applet
- 11: JavaScript-Code
- 12: Socket
- 13: Session
- 15: Systemsteuerungsdatenbank-Steuerprogramm
- 16a: Bildschirm
- 16b: Bildschirm
- 17a: Eingabeeinrichtung
- 17b: Eingabeeinrichtung
- 18a: Maus
- 18b: Maus
- 19a: Tastatur
- 19b: Tastatur
- 20a: Datenkabel
- 20b: Datenkabel
- 20c: Datenkabel
- 21a: Fenster
- 21b: Fenster
- 22a: Menüfeld
- 22b: Menüfeld
- 23: Funktionstasten-Funktions-Anzeigefeld
- 24: Browser
- 25: Cursor
- 26: Eingabefeld
- 27: Fenster
- 28: Button
- 29: Hierarchiebaum

## Patentansprüche

1. Daten-Kornmunikationssystem (1), welches von mehreren Benutzern gemeinsam verwendet werden kann, und welches einen oder mehrere zentrale Rechner (3) mit jeweils mindestens einer Speichereinrichtung aufweist, eine Vielzahl von über das Internet (4a, 4b) an den zentralen Rechner (3) anschließbaren Endgeräten (2a, 2b), welche jeweils ein Ein-/Ausgabemittel mit einer optischen Anzeigeeinrichtung (16a, 16b) und einer Eingabeeinrichtung (17a, 17b) aufweisen, wobei an der optischen Anzeigeeinrichtung (16a, 16b) in Reaktion auf vom jeweiligen Endgerät (2a, 2b) vom zentralen Rechner (3) über das Internet (4a, 4b) empfangene Daten hierzu korrespondierende Anzeigedaten angezeigt werden, und wobei vom jeweiligen Endgerät (2a, 2b) aus in Reaktion auf vom jeweiligen Benutzer am jeweiligen Ein-/Ausgabemittel getätigte Eingaben Datenanfrage-Daten über das Internet (4a, 4b) an den zentralen Rechner (3) gesendet werden, der zentrale Rechner (3) in Reaktion auf die empfangenen Datenanfrage-Daten entsprechende Datenbankdaten aus einer in der Speichereinrichtung abgespeicherten Datenbank (5, 6) ausliest, und zu den Datenbankdaten korrespondierende Datenanfrage-Antwortdaten über das Internet (4a, 4b) an das entsprechende Endgerät (2a, 2b) übermittelt, durch welche eine Anzeige korrespondierender, weiterer Anzeigedaten an der Anzeigeeinrichtung (16a, 16b) veranlaßt wird,
**dadurch gekennzeichnet, dass**
die vom zentralen Rechner (3) ausgesendeten Daten und Datenanfrage-Antwortdaten so gewählt sind, daß für den jeweiligen Benutzer am jeweiligen Ein-/Ausgabemittel eine graphische Window-Benutzeroberfläche bereitgestellt wird.

2. Daten-Kommunikationssystem (1) nach Anspruch 1, bei welchem die Daten und/oder die Datenanfrage-Daten und/oder die Datenanfrage-Antwortdaten über eine Internetverbindung übertragen werden, deren Herstellung durch Eingabe oder Aufrufen einer URL- (Universal Resource Locator-) Adresse am Endgerät (2a, 2b) verlaßt wird, wobei die URL-Adresse den zentralen Rechner (3) oder eine auf dessen Speichereinrichtung gespeicherte Datei kennzeichnet

3. Daten-Kommunikationssystem (1) nach einem der vorhergehenden Ansprüche, bei welchem die vom zentralen Rechner (3) ausgesendeten Daten so gewählt sind, daß an der optischen Anzeigeeinrichtung (16a, 16b) in Reaktion auf die Daten ein erstes Window (21a) angezeigt wird.

4. Daten-Kommunikationssystem (1) nach einem der vorhergehenden Ansprüche, bei welchem die graphische Window-Benutzeroberfläche dynamisch erzeugt, und angepaßt wird.

5. Daten-Kommunikationssystem (1) nach Anspruch 4, bei welchem die vom zentralen Rechner (3) ausgesendeten Daten ein mit Identifizierkennzeichen versehenes Daten-Dokument (8), insbesondere ein HTML-Dokument enthalten, mit dessen Hilfe die graphische Window-Benutzeroberfläche dynamisch erzeugt, und angepaßt wird.

6. Daten-Kommunikationssystem (1) nach Anspruch 5, bei welchem das Daten-Dokument (8) zur dynamischen Erzeugung und Anpassung der graphischen Window-Benutzeroberfläche ein vektor-graphik-basiertes Dokument (7), insbesondere ein SVG-(Scalable Vector Graphics-) Dokument enthält.

7. Daten-Kommunikationssystem (1) nach Anspruch 4, 5 oder 6, bei welchem zur dynamischen Erzeugung und Anpassung der graphischen Benutzeroberfläche im jeweiligen Endgerät (2a, 2b) eine hierarchisch aufgebaute Dokumentenstruktur mit DOM (Document Object Model) und Ereignismechanismus verwendet wird.

8. Daten-Kommunikationssystem (1) nach Anspruch einem der Ansprüche 3 bis 7, bei welchem an der optischen Anzeigeeinrichtung (16a, 16b) ein zweites Window (21b) angezeigt wird.

9. Daten-Kommunikationssystem (1) nach Anspruch 8, bei welchem der zentrale Rechner (3) und/oder das jeweilige Endgerät (2a, 2b) so ausgestaltet und eingerichtet ist, daß durch entsprechende Eingaben am Ein-/Ausgabemittel im ersten Window angezeigte Daten in das zweite Window kopiert werden können.

10. Zentraler Rechner (3) mit einer Speichereinrichtung, und mit einer darauf gespeicherten Datenbank (5, 6), welcher so ausgestaltet und eingerichtet ist, daß er als zentraler Rechner in einem Daten-Kommunikationssystem (1) nach einem der Ansprüche 1 bis 9 verwendbar ist.
